(19) **Europäisches Patentamt / European Patent Office / Office européen des brevets**

(11) **EP 2 462 405 B1**

(12) **FASCICULE DE BREVET EUROPEEN**

(45) Date de publication et mention de la délivrance du brevet:
**10.07.2013 Bulletin 2013/28**

(21) Numéro de dépôt: **10762969.3**

(22) Date de dépôt: **05.08.2010**

(51) Int Cl.:
**G01B 9/02** (2006.01)     **G01C 19/72** (2006.01)

(86) Numéro de dépôt international:
**PCT/FR2010/051656**

(87) Numéro de publication internationale:
**WO 2011/015788 (10.02.2011 Gazette 2011/06)**

(54) **INTERFEROMETRE A FIBRE OPTIQUE A FORTE PMD EN REGIME COUPLE, GYROSCOPE A FIBRE OPTIQUE (FOG) ET SYSTEME DE NAVIGATION INERTIELLE COMPRENANT UN TEL GYROSCOPE**

INTERFEROMETER MIT EINER GLASFASER MIT HOHER PMD IM GEKOPPELTEN MODUS, GLASFASERGYROSKOP UND TRÄGHEITSNAVIGATIONSSYSTEM MIT EINEM SOLCHEN GYROSKOP

INTERFEROMETER WITH A FIBER OPTIC HAVING A HIGH PMD IN COUPLED MODE, FIBER OPTIC GYROSCOPE (FOG), AND INERTIAL NAVIGATION SYSTEM INCLUDING SUCH A GYROSCOPE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **06.08.2009 FR 0955532**

(43) Date de publication de la demande:
**13.06.2012 Bulletin 2012/24**

(73) Titulaire: **IXBLUE**
**78160 Marly le Rol (FR)**

(72) Inventeurs:
• **LEFEVRE, Hervé, Claude**
**F-75007 Paris (FR)**
• **MOLUCON, Cédric, Alain, Jacky**
**F-75007 Paris (FR)**

• **HONTHAAS, Joachin**
**F-75017 Paris (FR)**

(74) Mandataire: **Chauvin, Vincent et al**
**Coralis**
**14/16, rue Ballu**
**75009 Paris (FR)**

(56) Documents cités:
**EP-A1- 1 416 251     US-B2- 6 801 319**

• **Gordon and Kogelnik: "Polarization mode dispersion in optical fibers"; "9" In: "Proceedings of the National Academy of Science PNAS" avril 2000 (2000-04), , XP002577536 vol. 97, , pages 4541-4550 cité dans la demande le document en entier**

**EP 2 462 405 B1**

**Description**

Le domaine de l'invention est celui des gyroscopes interférométriques basés sur l'effet Sagnac et plus particulièrement celui des gyroscopes à fibre optique (ou FOG pour fiber-optic gyroscope).

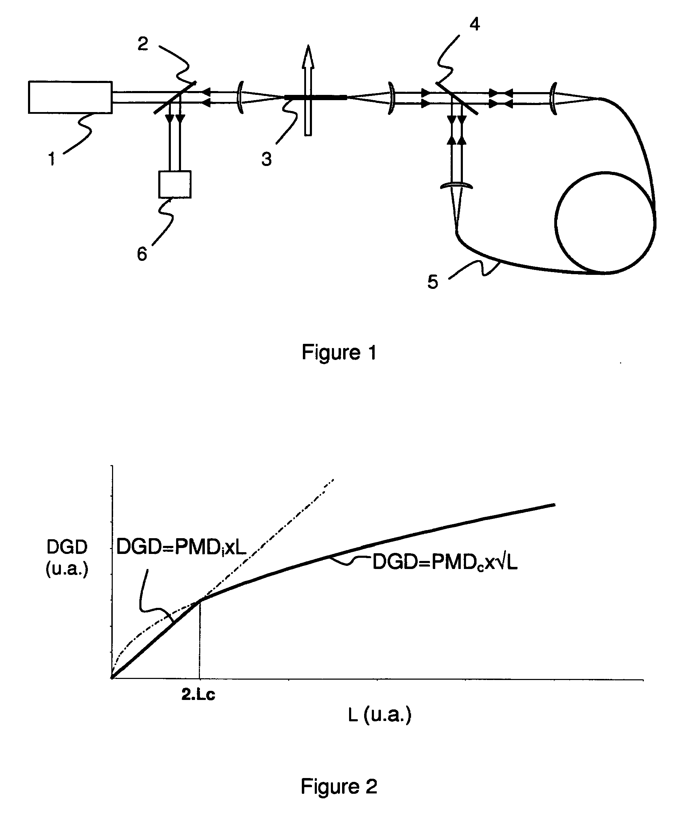

Les gyroscopes à fibre optique sont de plus en plus utilisés pour la mesure de rotation dans les systèmes de navigation inertielle du fait de leurs qualités en termes de fiabilité, compacité et extrême sensibilité, notamment lorsque toute aide extérieure à la navigation est impossible ou inutilisable. Un gyroscope à fibre optique est un interféromètre en anneau de Sagnac tel que décrit sur la figure 1. Un gyroscope à fibre optique comporte généralement une source 1 à spectre large, un premier séparateur de faisceau 2 (dit séparateur source-récepteur), un filtre 3 monomode spatial et en polarisation en entrée-sortie, un deuxième séparateur 4 (dit séparateur de bobine), une bobine de fibre optique 5 et un détecteur 6. De manière connue en soi, un gyroscope comprend généralement un modulateur (de phase ou de fréquence) et un système adapté de traitement du signal. La largeur spectrale de la source $\Delta\lambda_{FWHM}$ est généralement comprise entre 0, 1 % et 10% de la longueur d'onde centrale $\lambda$ d'émission. La largeur spectrale peut correspondre à la largeur d'émission de la source. On peut aussi utiliser une source fine (de largeur naturelle <1 nm), balayée sur une plus grande plage spectrale (1-100nm).

En configuration réciproque, après être passé par le polariseur et le filtre spatial, le faisceau lumineux incident est divisé pour produire un premier et un deuxième faisceaux secondaires. Le premier faisceau qui a été polarisé à l'entrée est injecté via une première extrémité de la bobine dans le sens horaire par exemple, puis émerge par la seconde extrémité de la bobine pour traverser à nouveau le polariseur. Le deuxième faisceau qui a également été polarisé à l'entrée est injecté via la seconde extrémité de la bobine dans le sens antihoraire et émerge de la première extrémité de la bobine pour traverser à nouveau le polariseur. En aval du polariseur, les premier et deuxième faisceaux interfèrent et ces interférences sont lues au niveau du détecteur.

De façon imagée, si le gyroscope est au repos, les premier et second faisceaux lumineux suivent des trajets identiques et sont en phase au niveau du détecteur. En revanche, si le gyroscope est en mouvement, plus précisément si la bobine tourne dans le sens horaire autour de son axe, le premier faisceau lumineux suit le bras le plus « long » de l'interféromètre alors que le second faisceau lumineux suit le bras le plus « court » de l'interféromètre. La rotation de la bobine génère donc un déphasage entre les premier et deuxième faisceaux lumineux circulant dans des sens opposés le long de la fibre optique. Ce déphasage modifie l'état d'interférence des premiers et deuxièmes faisceaux lumineux au niveau du détecteur.

Pour que ce type de capteur de rotation fonctionne, il faut s'assurer que l'état de polarisation dans l'interféromètre n'est pas susceptible de provoquer l'extinction de la puissance optique en sortie du polariseur et donc sur le détecteur, ou, tout au moins, une atténuation incompatible avec une détection fiable.

Dans l'état de l'art deux solutions connues existent. La première solution connue consiste à utiliser une bobine formée d'une fibre monomode dite à maintien de polarisation (ou fibre MP). En fait une fibre à maintien de polarisation est une fibre très biréfringente ayant deux axes orthogonaux dits principaux. Une telle fibre est apte à conserver la polarisation du faisceau lumineux tout au long de son trajet dans la fibre si la polarisation de ce faisceau est alignée avec un de ses axes principaux. Ceci est réalisé en assurant un couplage nul ou faible entre les modes principaux de la fibre. On sait par exemple réaliser une fibre ayant un couplage faible entre ses modes principaux, en formant son coeur de façon qu'il soit elliptique ou en créant des champs de contraintes dans la fibre.

Lors de l'utilisation d'une fibre à maintien de polarisation dans un gyroscope, il faut précisément orienter la fibre par rapport à l'axe du polariseur d'entrée-sortie pour ne pas provoquer l'extinction du signal. Ainsi, si en entrée de la fibre, l'axe du polariseur est parallèle à l'un des modes principaux de la fibre, la lumière émergera de la fibre avec une polarisation le long du mode principal sélectionné. Il faut également, au niveau de la sortie de la fibre, que le mode principal sélectionné soit encore parallèle à l'axe du polariseur. Dans la configuration la plus défavorable, au niveau de la sortie de la fibre, le mode principal sélectionné de la fibre et l'axe du polariseur sont orthogonaux de sorte qu'il y a une extinction totale de la puissance lumineuse tombant sur le détecteur. Toute détection est alors irréalisable. Dans des dispositions relatives moins défavorables, c'est-à-dire où le mode principal sélectionné et l'axe du polariseur ne sont pas orthogonaux, le polariseur de sortie atténue substantiellement le faisceau émergeant, ce qui réduit d'autant la puissance tombant sur le détecteur et donc la sensibilité du gyroscope.

En conséquence, lors de la fabrication industrielle d'un FOG, un soin tout particulier doit être apporté à l'étape de montage de la bobine de fibre optique pour qu'un même axe principal soit aligné sur l'axe du polariseur aux deux extrémités de la fibre MP de sorte que la puissance lumineuse incidente sur le détecteur soit compatible avec une mesure d'une variation du signal. Cette étape d'alignement est souvent réalisée à la main. Il s'agit donc d'une étape délicate et coûteuse.

Par ailleurs, l'atténuation dans une fibre MP est de l'ordre de 1dB/km. Or, la sensibilité d'un FOG est proportionnelle à la longueur de la bobine de fibre, qui est généralement comprise entre 0,1 km et 10km. Une longueur de fibre MP de 10km, correspond ainsi à une atténuation du signal de 10 dB, déjà très forte. L'atténuation linéique rend donc inutilisable une fibre MP de grande longueur dans un FOG. Les FOG basés sur l'utilisation d'une fibre MP ont généralement en pratique une longueur de bobine limitée à une dizaine de kilomètres, ce qui limite également leur sensibilité.

De plus, la fibre à maintien de polarisation est d'un coût plus élevé que les fibres classiques qui ne conservent pas la polarisation.

La deuxième solution connue consiste à utiliser d'une part une bobine formée d'une fibre monomode standard (dite communément « Fibre télécom » ou SM, pour Single Mode) donc sans conservation de polarisation et d'autre part des dépolariseurs dits de Lyot, disposés par exemple en entrée et en sortie de la bobine de fibre (cf US 6801319 Szafraniec et al., Symetrical depolarized fiber optic gyroscope). Dans US 6801319, le premier faisceau secondaire polarisé par traversée du polariseur d'entrée-sortie, est dépolarisé par passage à travers le dépolariseur de Lyot, avant d'être injecté dans la bobine de fibre SM dans le sens horaire. La puissance lumineuse injectée dans la bobine est ainsi répartie dans toutes les directions de polarisation et ceci de manière homogène. A l'autre extrémité de la bobine, on est ainsi certain qu'une fraction de la puissance lumineuse injectée a une polarisation compatible avec l'axe du polarisateur d'entrée-sortie de sorte que l'on a toujours une puissance lumineuse suffisante en aval du polariseur d'entrée-sortie, puisque seule la moitié de l'intensité d'un faisceau dépolarisé est perdue après passage dans le polariseur. Un trajet optique similaire est suivi par le deuxième faisceau secondaire injecté dans la bobine de fibre dans le sens antihoraire. Finalement, quelle que soit l'orientation relative de la fibre par rapport au polariseur lors du montage du gyroscope, les premiers et deuxièmes faisceaux interfèrent au niveau du détecteur.

Une fibre SM sans conservation de polarisation présente l'avantage d'avoir un coût réduit et de permettre un montage moins contraignant. Mais cette solution présente l'inconvénient de requérir l'utilisation de dépolariseurs de Lyot dont le coût est élevé et dont l'intégration avec la bobine de fibre complique la fabrication du FOG.

Enfin, l'atténuation dans une fibre SM est actuellement au minimum de 0,25dB/km. Pour une longueur de fibre de 40km, l'atténuation du signal est donc d'au moins 10dB, ce qui fixe en pratique la longueur maximum pour les FOG à base de fibre SM. La longueur de fibre d'un FOG à base de fibre SM est généralement comprise entre 0,1 km et 20km.

De manière générale, toute fibre optique présente une dispersion modale de polarisation (Polarisation Mode Dispersion ou PMD) (voir par exemple : Fundamentals of Optical Fibers, John A.BUCK; 2004 : pages 161 à 172). Plus précisément, on considère qu'une fibre possède deux régimes de PMD en fonction de la longueur L de fibre utilisée.

Un premier régime dit « intrinsèque » où la différence de temps de groupe de propagation entre les deux modes principaux de polarisation, notée DGD (differential group delay ou différentiel de temps de groupe) s'accroît linéairement avec la longueur L de la fibre. La pente de cette loi linéaire est notée $PMD_i$ pour Intrinsic Polarisation Mode Dispersion ou Dispersion modale de polarisation en régime intrinsèque. Dans ce régime intrinsèque, on a donc :

$$DGD = PMD_i \times L$$

où le coefficient $PMD_i$ est lié à la différence d'indice effectif de groupe entre les modes orthogonaux

$$\left( \Delta Neff = \Delta n_{eff} - \lambda \times \frac{d\Delta n_{eff}}{d\lambda} \right),$$ $\Delta N_{eff}$ est la différence d'indice effectif de groupe entre les modes orthogonaux et $c$ la célérité de lumière dans le vide :

$$PMD_i = \frac{\Delta Neff}{c}$$

La $PMD_i$ est généralement exprimée en ps/km.

Ce régime intrinsèque correspond à une biréfringence. On peut définir une longueur de battement A qui est la longueur de fibre au bout de laquelle le DGD est égal à la période T(=λ/c) de l'onde soit :

$$T = PMD_i \times \Lambda$$

$$T = \frac{\Delta Neff}{c} \times \Lambda$$

Ce comportement intrinsèque se poursuit jusqu'à une longueur $2L_c$ où $L_c$ est dite longueur de corrélation de la fibre (voir : Fundamentals of Optical Fibers, John A.BUCK ; 2004 : pages 161 à 172).

Pour une longueur de fibre L supérieure à 2L$_c$, on passe dans un régime dit couplé où le DGD croît alors en racine carrée de la longueur. Le coefficient de cette loi en racine est noté PMD$_c$ :

$$DGD = PMD_c \times \sqrt{L} \quad \text{quand L>L}_c$$

où

$$PMD_c = \frac{\Delta Neff}{c} \times \sqrt{2L_c} = \frac{DGD}{\sqrt{L}}$$

La PMD$_c$ est exprimée généralement en ps/√km

On peut ainsi définir le modèle suivant valable pour tout type de fibre :

pour L<2L$_c$ : $DGD(L) = PMD_i \times L$

pour        L>2L$_c$ :         $DGD(L) = PMD_c \times \sqrt{L}$        et        donc        pour        L=2L$_c$ :

$$DGD(2L_c) = PMD_i \times 2L_c = PMD_c \times \sqrt{2L_c}$$

Toute fibre a donc une courbe caractéristique de son DGD en fonction de la longueur L de la forme représentée schématiquement sur la figure 2.

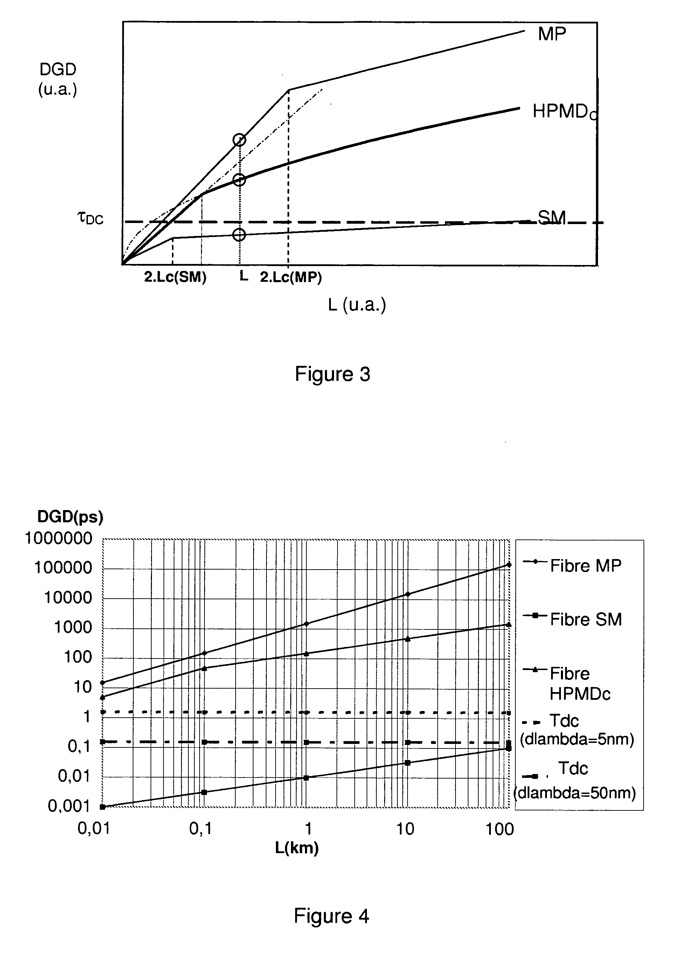

En pratique une fibre à maintien de polarisation (MP) est caractérisée par une longueur de battement A de l'ordre de 3mm à une longueur d'onde de 1550nm soit un $\Delta Neff \approx 5.10^{-4}$ d'où PMD$_i \approx$ 1,5ns/km. La longueur $2 \times L_c$ est de l'ordre de 100km environ, on en déduit donc une PMD$_c \approx$ 15ns/√km (cf courbe Fibre MP sur la figure 3).

Une fibre SM standard est caractérisée par une longueur de battement A de l'ordre de 15m à 1550nm soit un $\Delta Neff \approx 1.10^{-7}$ à 1550nm d'où PMD$_i \approx$ 0.3ps/km. Elle est aussi caractérisée par une PMD$_c \approx$ 0.03ps/√km. On en déduit donc une longueur Lc de 5m environ (cf courbe SM sur la figure 3).

Un FOG basé sur l'utilisation d'une fibre à maintien de polarisation fonctionne en régime intrinsèque, avec une longueur de fibre L comprise entre 0,1km et 10km Cette longueur L est inférieure à la longueur 2xL$_c$ (généralement 100km) ce qui évite le couplage entre modes orthogonaux de polarisation. La longueur L maximum est limitée en pratique par l'atténuation de la fibre (environ 1 dB/km soit 100dB pour 100km).

Un FOG basé sur l'utilisation d'une fibre standard SM fonctionne en régime couplé, puisque la longueur de corrélation est très faible, mais la valeur de la PMD$_c$ est très faible et il est nécessaire d'utiliser des dépolariseurs de Lyot pour obtenir un brouillage homogène des modes de polarisation.

De manière générale, la PMD d'une fibre provoque un étalement des impulsions d'entrée, ce qui limite la bande passante d'une fibre. Selon l'art antérieur, on cherche donc à produire des fibres ayant des valeurs de PMD faibles, stables dans le temps et insensibles aux variations des conditions environnantes, de manière à augmenter la bande passante des fibres.

Un des buts de l'invention est de fabriquer un interféromètre à fibre optique ayant une bonne sensibilité et de coût réduit. Une application préférée de l'interféromètre de l'invention est un gyroscope à fibre optique.

A cet effet, la présente invention concerne plus particulièrement un interféromètre à fibre optique comprenant une source optique large bande, apte à émettre un faisceau optique incident de longueur d'onde centrale λ et de largeur spectrale $\Delta\lambda_{FWHM}$ (FWHM pour Full Width at Half Maximum soit pleine largeur à mi-hauteur) typiquement de 0.1% à 10% de λ et ayant un temps de décohérence $\tau_{DC}$, où $\tau_{DC} = \dfrac{\lambda^2}{c.\Delta\lambda_{FWHM}}$, une bobine de N spires d'une fibre optique monomode de longueur totale L, ladite fibre ayant une première et une seconde extrémités, des moyens optiques aptes à séparer le faisceau incident en un premier et un second faisceaux couplés respectivement à la première et à la seconde extrémité de la fibre optique de manière à ce que le premier faisceau parcoure la fibre optique selon une première direction et le second faisceau parcoure la fibre optique selon une direction contra-propagative, lesdits moyens optiques étant aptes à combiner les deux faisceaux issus respectivement des deux extrémités après propagation dans la fibre en un faisceau de sortie et un détecteur apte à détecter les interférences du faisceau de sortie.

Selon l'invention, la fibre optique de la bobine est une fibre optique à forte dispersion des modes de polarisation (PMD), la longueur L de la bobine de fibre optique étant supérieure au double de la longueur de corrélation de la fibre, L > 2.L$_c$ de manière à ce que la fibre fonctionne en régime couplé et que le différentiel de temps de groupe (DGD) de propagation entre deux états de polarisation orthogonaux accumulé sur la longueur L de la fibre soit supérieur au temps de décohérence de la source :

$$DGD = PMD_c \times \sqrt{L} > \tau_{DC} = \frac{\lambda^2}{c.\Delta\lambda_{FWHM}}.$$

Un mode de réalisation préféré concerne un gyroscope à fibre optique comprenant un interféromètre selon l'invention, dans lequel les moyens optiques comprennent un séparateur optique bidirectionnel apte à séparer spatialement le faisceau incident en un premier et un second faisceaux couplés respectivement à la première et à la seconde extrémité de la fibre optique de manière à ce que le premier faisceau parcourre la fibre optique selon une première direction et le second faisceau parcourre la fibre optique selon une direction contra-propagative, ledit séparateur étant apte à combiner les deux faisceaux issus respectivement des deux extrémités après propagation dans la fibre en un faisceau de sortie, et un filtre monomode spatial et un polariseur aptes à recevoir le faisceau incident de la source et à transmettre ledit faisceau incident monomode spatial et polarisé linéairement au séparateur optique.

Selon un mode de réalisation particulier le gyroscope de l'invention comprend un séparateur apte à séparer spatialement le faisceau incident issu de la source et le faisceau de sortie et à transmettre respectivement le faisceau incident vers la bobine de fibre et le faisceau de sortie vers le détecteur.

Selon un mode de réalisation préféré du gyroscope de l'invention, la fibre optique a un DGD accumulé sur la longueur L de la fibre supérieur à cent fois le temps de décohérence de la source DGD > 100.$\tau_{DC}$

Selon un mode de réalisation particulier du gyroscope de l'invention, la fibre optique est une fibre biréfringente ayant un coefficient de PMD en mode couplé PMD$_c$ compris entre 1 et 1000 ps/√km.

Selon un mode de réalisation particulier du gyroscope de l'invention, la fibre optique est une fibre biréfringente ayant une différence d'indice effectif de groupe entre modes de polarisation orthogonaux

$( \Delta Neff = \Delta n_{eff} - \lambda \times \frac{d\Delta n_{eff}}{d\lambda} )$ à la longueur d'onde $\lambda$ comprise entre $10^{-6}$ et $2.10^{-4}$

Selon un mode de réalisation préféré du gyroscope de l'invention, la longueur L de la bobine de fibre est comprise entre 0.1 km et 20km.

Selon un mode de réalisation préféré du gyroscope de l'invention, la longueur d'onde $\lambda$ de la source est comprise entre 800 et 1600 nm et la largeur spectrale $\Delta\lambda_{FWHM}$ est comprise entre 0.1% et 10% de $\lambda$.

L'invention concerne également un système de navigation inertielle comprenant un gyroscope selon l'invention.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera mieux comprendre comment l'invention peut être réalisée en référence aux dessins annexés sur lesquels :

- la figure 1 représente schématiquement un gyroscope à fibre optique ;
- la figure 2 représente schématiquement une courbe de variation du différentiel de temps de groupe des modes de polarisation (DGD) en fonction de la longueur L de fibre et indique les deux régimes de propagation : le régime intrinsèque et le régime couplé ;
- la figure 3 représente de manière schématique les courbes de DGD de trois types de fibres : une fibre SM monomode (non biréfringente), une fibre à maintien de polarisation (MP) et une fibre à forte dispersion des modes de polarisation en régime couplé (HPMDc) ;
- la figure 4 représente des exemples numériques de DGD en fonction de la longueur L pour trois types de fibres ainsi que les niveaux de temps de décorrélation correspondant à des sources de différentes largeurs spectrales centrées autour de 1550nm ;
- la figure 5 représente un vecteur de polarisation sur la sphère de Poincaré ;
- la figure 6 représente un exemple de variation du vecteur polarisation pour une variation de longueur d'onde entre 1470nm et 1570nm à travers une fibre SM de 40 km de long ;
- la figure 7 représente un exemple de variation du vecteur polarisation à travers une fibre à maintien de polarisation représentant l'alignement de la polarisation initiale avec les axes de la fibre ;
- la figure 8 représente le spectre d'une source de longueur d'onde centrale 1532nm et de largeur spectrale $\Delta\lambda_{FWHM}$ =5nm après transmission dans une fibre HPMD$_c$ entre polariseur et analyseur.

Par opposition aux deux cas classiques (la fibre standard SM à faibles valeurs de PMD$_i$, PMD$_c$ et L$_c$ et fonctionnant dans le régime couplé et la fibre à maintien de polarisation MP à très fortes valeurs de PMD$_i$, PMD$_c$ et L$_c$, et fonctionnant dans le régime intrinsèque), l'invention propose l'utilisation d'une fibre à forte valeur de PMD$_i$ et PMD$_c$ et fonctionnant dans le régime couplé. On la définira comme fibre HPMD$_c$ (coupled High Polarisation Mode Dispersion fiber ou fibre à forte dispersion modale de polarisation travaillant en régime couplé).

Un exemple de fibre HPMD$_c$ est une fibre pour laquelle on travaille en régime couplé ayant une PMD$_i$ élevée de l'ordre de quelques centaines ps/km et une PMDc de quelques centaines de ps/√km. Par exemple PMDi≈500ps/km et PMDc ≈150ps/√km :

|  | fibre MP | fibre HPMDc | fibre SM |
|---|---|---|---|
| PMDi | élevé: qqs ns/km | moyen:qqs 100ps/km | faible: qqs 0,1 ps/km |
| 2Lc | >100km | <100m | <20m |
| PMDc | élevé: qqs 10ns/Vkm | moyen:qqs 100ps/Vkm | faible: qqs 0,01 ps/Vkm |
| régime de fonctionnement | intrinsèque | couplé | couplé |

Une fibre HPMD$_c$ peut être réalisée avec une technologie similaire aux fibres MP (barreaux de contrainte ou coeur elliptique) mais en diminuant sa biréfringence ($\Delta N_{eff}$ de l'ordre de 1 à $2.10^{-4}$ comparé à $5.10^{-4}$ pour une fibre MP) ce qui simplifie considérablement sa fabrication. Autrement dit, une fibre HPMD$_c$ a une PMD$_i$ comprise entre ~3ps/km et ~700ps/km.

La figure 3 représente schématiquement les courbes de DGD en fonction de la longueur L de fibre utilisée, pour les trois types de fibres : SM, MP et HPMD$_c$. Le rond représente pour chaque type de fibre le point correspondant au régime d'utilisation dans un FOG ayant une bobine de fibre de longueur L.

La figure 4 représente un exemple numérique de courbes de DGD en fonction de la longueur de fibre (échelles logarithmiques en abscisse et en ordonnée) et indique le niveau de temps de décorrélation pour des sources ayant différentes largeurs spectrales (respectivement 5nm et 50nm).

Le formalisme de Stokes-Mueller et la sphère de Poincaré permettent de définir et de représenter l'état de polarisation d'un faisceau lumineux. Voir par exemple : « Etude de la dispersion modale de polarisation dans les systèmes régénérés optiquement », thèse de Benoit Clouet 15/01/2009 pages 37-56 et 244 ; J. P. Gordon, H. Kogelnik, PMD fundamentals : « Polarization mode dispersion in optical fibers », Proceedings of the National Academy of Sciences PNAS, Vol. 97, No. 9, Apr. 2000, pp. 4541-4550. P. K. A. Wai, C. R. Menyuk, "Polarization mode dispersion, decorrelation, and diffusion in optical fibers with randomly varying birefringence" IEEE Journal of Lightwave Technology, Vol. 14, No. 2, Feb.1996, pp. 148-157 ; M. Midrio, "Nonlinear principal states of polarization in optical fibers with randomly varying birefringence", Journal of Optical Society of America B, Vol. 17, No. 2, Feb. 2000, pp. 169-177 ; G. J. Foschini, C. D. Poole, "Statistical theory of polarization dispersion in single mode fibers", IEEE Journal of Lightwave Technology, Vol. 9,No. 11, Nov. 1991, pp. 1439-1456.

Le formalisme de Stokes représente un état de polarisation par un quadrivecteur réel appelé quadrivecteur de Stokes ou plus simplement vecteur de Stokes. Les composantes de ce vecteur ont la dimension d'intensités optiques. Soit une onde plane quasi-monochromatique (polarisée ou non). Le quadrivecteur de Stokes S est défini à partir du champ électrique comme suit :

$$\vec{S} = \begin{bmatrix} S0 \\ S1 \\ S2 \\ S3 \end{bmatrix} = \begin{bmatrix} <|Ex(t)|2 + |Ey(t)|2> \\ <|Ex(t)|2 - |Ey(t)|2> \\ 2<|Ex(t)\| Ey(t)|\cos(\_x(t) - \_y(t))> \\ 2<|Ex(t)\| Ey(t)|\sin(\_x(t) - \_y(t))> \end{bmatrix}$$

La notation < x(t) > désigne la moyenne temporelle de x :

$$<x> = \frac{1}{T}\int_0^T x(t)dt$$

Où le temps d'intégration T est généralement choisi suffisamment grand pour que < x > soit indépendant de T.

Le vecteur de Stokes associé à un champ peut s'écrire comme :

$$\vec{S} = \begin{bmatrix} S0 \\ S1 \\ S2 \\ S3 \end{bmatrix} = \begin{bmatrix} S0 \\ S0\cos(2\theta)\cos(2\varepsilon) \\ S0\sin(2\theta)\cos(2\varepsilon) \\ S0\sin(2\varepsilon) \end{bmatrix}$$

Où $\theta$ est l'angle d'azimut et $\varepsilon$ l'angle d'ellipticité. $\theta$ définit l'inclinaison de l'ellipse de polarisation et $\varepsilon$ son ellipticité, $\varepsilon$ est positif pour les polarisations droites et négatif pour les polarisations gauches.

Pour un champ parfaitement polarisé, les composantes du vecteur de Stokes vérifient :

$$S0^2 = S1^2 + S2^2 + S3^2$$

Le formalisme de Stokes permet d'employer une représentation très pratique des états de polarisation : la sphère de Poincaré. Si on normalise le vecteur de Stokes d'une onde optique, il s'écrit :

$$\hat{S} = \frac{1}{S0}\begin{bmatrix} S0 \\ S1 \\ S2 \\ S3 \end{bmatrix} = \begin{bmatrix} 1 \\ \cos(2\theta)\cos(2\varepsilon) \\ \sin(2\theta)\cos(2\varepsilon) \\ \sin(2\varepsilon) \end{bmatrix}$$

Les trois dernières composantes caractérisent la partie polarisée de l'onde.

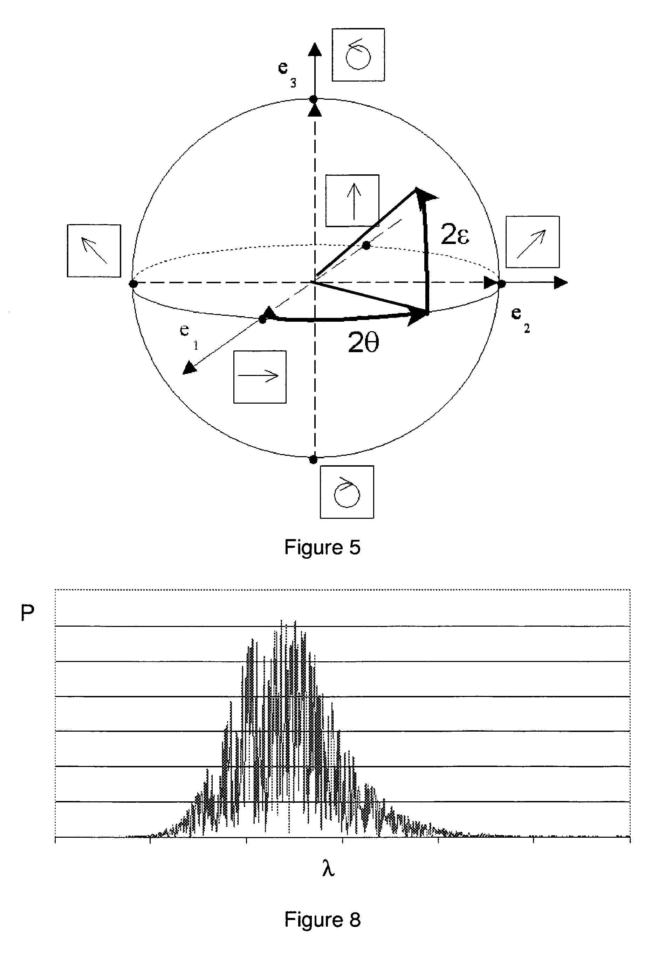

Elles peuvent être interprétées comme les coordonnées (azimut, élévation) d'un point sur une sphère. On peut donc représenter les états de polarisation sur une sphère. Ils sont complètement caractérisés par la donnée de l'azimut $\theta$ et de l'ellipticité $\varepsilon$, le rayon de la sphère étant normalisé à l'unité. La sphère de Poincaré est représentée schématiquement figure 5.

Un point sur la sphère de Poincaré est repéré par rapport à trois axes : $e_1$ la polarisation linéaire horizontale, $e_2$ la polarisation linéaire à 45° et $e_3$ la polarisation circulaire droite. Les polarisations linéaires sont situées sur l'équateur de la sphère. Les polarisations circulaires gauche et droite sont aux pôles bas et haut de la sphère. Les polarisations elliptiques droites sont dans l'hémisphère supérieur.

Deux polarisations orthogonales sont représentées par des points diamétralement opposés sur la sphère, c'est-à-dire des vecteurs de Stokes opposés.

En effet, les angles sur la sphère sont doublés par rapport au monde physique.

Nous pouvons définir un vecteur pour la PMD, à partir :

- des états principaux de polarisation ;
- du DGD.

Le vecteur dispersion de polarisation est défini dans l'espace de Stokes selon $\vec{\Omega} = DGD.\hat{p}$, pour une longueur z donnée. Ce vecteur est défini à une fréquence optique donnée mais englobe toute la fibre jusqu'à l'abscisse z ; il dicte l'évolution de la polarisation selon z. Nous pouvons écrire la loi de rotation infinitésimale pour la dispersion de polarisation :

$$\frac{\partial\hat{s}}{\partial\omega} = \vec{\Omega}*\hat{s}$$

Cette équation peut servir de définition au vecteur dispersion de polarisation. Pour une polarisation d'entrée indépendante de la fréquence, l'évolution de la polarisation se fait selon un cercle sur la sphère de Poincaré, autour de l'axe défini par le vecteur dispersion de polarisation à une vitesse donnée par la valeur de la PMD; la période fréquentielle

de rotation vaut : $\Delta\omega_{cycle} = \dfrac{2\pi}{DGD}$

Cette équation relie directement l'évolution de la polarisation dans le domaine fréquentiel aux effets temporels de la PMD par la norme du vecteur dispersion de polarisation.

Nous définissons alors le vecteur biréfringence par $\vec{\beta} = \Delta\beta\hat{\beta}$ comme un vecteur de Stokes avec pour direction le mode propre de polarisation lent $\hat{\beta}$ et pour norme $\Delta\beta$.

L'équation dynamique de la PMD s'écrit :

$$\frac{\partial\vec{\Omega}}{\partial z} = \frac{\partial\vec{\beta}}{\partial\omega} + \vec{\beta}*\vec{\Omega}$$

Cette équation est à la base de la théorie de la PMD. Elle relie la notion macroscopique de dispersion de polarisation (gauche) à la notion locale de biréfringence (droite). Elle gouverne l'évolution du vecteur dispersion de polarisation avec la distance. Dans le membre de droite de l'équation, le premier terme dicte l'évolution du DGD. Le deuxième terme n'intervient que dans la direction du vecteur dispersion de polarisation.

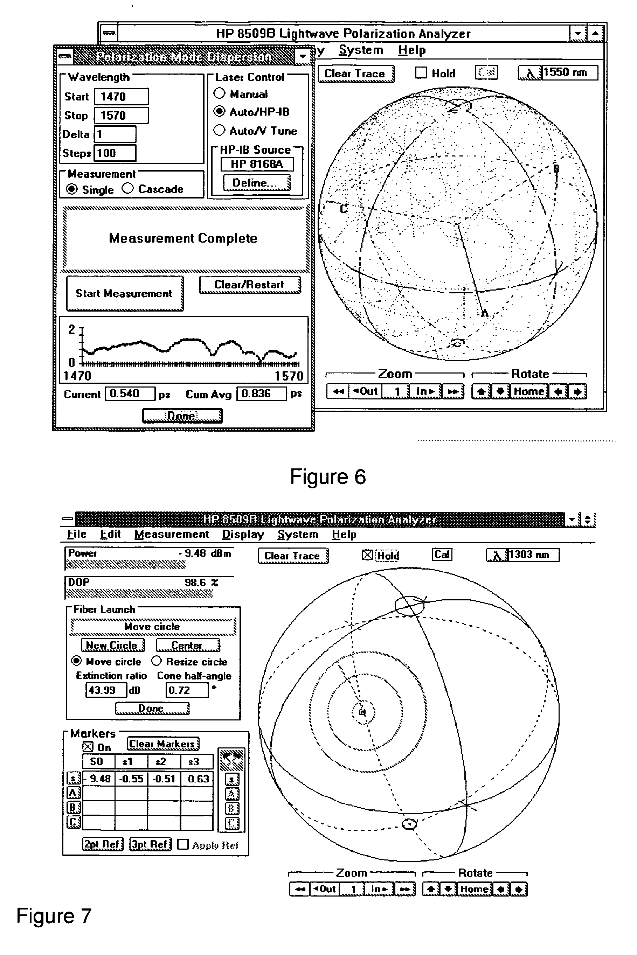

Dans le cas d'une fibre fonctionnant en régime intrinsèque, la mesure de la PMD avec l'état de polarisation en fonction de la longueur d'onde (cf par exemple la méthode décrite dans Measurement of Polarization-Mode Dispersion by Brian L. Heffner and Paul R. Hernday dans Hewlett-Packard Journal fevrier 1995, en utilisant un analyseur de polarisation et une source laser accordable en longueur d'onde) est donc une rotation sur la sphère de Poincaré autour de l'axe de biréfringence de la fibre et le diamètre de ce cercle est fonction de l'alignement de la polarisation d'entrée avec les axes principaux de la fibre (cf figure 7).

Dans le cas d'une fibre travaillant en régime couplé, soit des fibres dont la longueur est bien supérieure à la longueur de corrélation de la fibre, le vecteur biréfringence varie le long de la fibre. Alors, la PMD devient un phénomène non déterministe. L'évolution de la polarisation se fait alors selon une courbe aléatoire sur la sphère de Poincaré. Ce déplacement aléatoire sur la sphère de Poincaré peut couvrir l'ensemble de la sphère.

Par exemple, pour une fibre standard SM il faut une très grande longueur de fibre (L supérieure à 40km) et une très grande variation de longueur d'onde (environ 100nm) pour couvrir l'ensemble de la sphère de Poincaré. Ainsi la figure 6 représente les variations du vecteur dispersion de polarisation pour une fibre SMF de 40 km de long sur une représentation de la sphère de Poincare (Agilent 8509B Lightwave polarization Analyzer Product Overview (1993)).

Au contraire, une fibre à maintien de polarisation (MP) fonctionnant en régime intrinsèque a comme représentation un cercle sur la sphère de Poincaré dont le demi-angle du cône dépend de l'alignement entre le polariseur et un axe principal de la fibre en entrée et en sortie de la bobine. La figure 7 représente différents cercles grisés sur la sphère de Poincaré chaque cercle correspondant à un défaut d'alignement entre les axes de la fibre et l'axe du polariseur (un alignement parfait correspond à un point sur la sphère). La largeur spectrale de la source est ici de 100nm, obtenue en variant une source fine sur une bande de 100nm.

Dans le cas de fibres HPMD$_c$ l'ensemble de la sphère de Poincaré est parcouru de façon aléatoire comme dans le cas de la fibre SM de la figure 6 mais avec une largeur de spectre et une longueur beaucoup plus faible : pour des longueurs de bobine de l'ordre de 0.1 km à 10km et un spectre de l'ordre du nm.

On observe également l'effet de brouillage de polarisation induit par une fibre HPMDc sur le spectre de la source traversant cette fibre HPMD$_c$ entre polariseur et analyseur. On observe sur la courbe de la figure 8 un spectre bruité avec une source de $\Delta\lambda_{FWHM}$ = 5nm (pleine largeur à mi-hauteur, FWHM) et une fibre HPMD$_c$ de longueur 4km. En effet, plus le spectre est bruité, plus la polarisation de la lumière est brouillée et meilleur est le système pour un FOG.

L'invention utilise une fibre HMPD$_c$ à forte dispersion modale de polarisation (PMD) en régime couplé de longueur suffisante, effectuant un brouillage de polarisation. Ce faisant, le FOG de l'invention évite le recours à des fibres à maintien de polarisation tout comme le recours à des fibres sans maintien de polarisation associées à des dépolariseurs de Lyot.

La fabrication d'un FOG selon l'invention est ainsi simplifiée : le problème de la fabrication et de l'intégration des dépolariseurs de Lyot dans l'interféromètre de Sagnac ne se pose plus et la connexion au polariseur d'entrée-sortie ne se fait plus avec la contrainte d'alignement des modes principaux de la fibre et de l'axe du polariseur puisque l'interféromètre de Sagnac du FOG selon l'invention ne possède pas d'axe géométrique privilégié. Le FOG selon l'invention est d'une fabrication industrielle plus facile et d'un coût réduit de sorte que l'on peut généraliser l'utilisation des FOG.

La figure 1 représente schématiquement un gyroscope à fibre optique selon l'invention. Le FOG comporte une source 1 à spectre large ; deux séparateurs de faisceau 2 et 4 ; un filtre spatial et en polarisation en entrée-sortie 3 ; une bobine 5 comportant N spires d'une fibre optique monomode à forte PMD en régime couplé brouillant la polarisation et un détecteur 6. Le fonctionnement d'un tel FOG s'apparente à celui d'un FOG à fibre SM en régime couplé ou à fibre MP en régime intrinsèque. Toutefois, le FOG de l'invention ne comporte ni dépolariseur de Lyot ni ne fonctionne en régime intrinsèque.

Afin que la fibre à forte PMD en régime couplé réalise un brouilleur de polarisation en ligne, il est nécessaire que celle-ci travaille effectivement en régime couplé et que le DGD soit supérieur au temps de décohérence de la source utilisée :

$$ DGD > \tau_{dc} $$

où l'on peut définir $\tau_{dc}$ pour une source comme :

$$ \tau_{dc} = \frac{\lambda^2}{c.\Delta\lambda_{FWHM}} $$

avec $\Delta\lambda_{FWHM}$ la pleine largeur à mi-hauteur de la source.

Le brouillage de polarisation étant un phénomène aléatoire en régime couplé il y a toujours une moitié de la lumière qui passe au travers du polariseur du FOG, ceci assure donc la sensibilité constante du système.

Cependant un des paramètres importants également dans un gyroscope à fibre optique est la stabilité de son facteur d'échelle, défini comme étant la pente de la courbe de phase mesurée en fonction de la vitesse de rotation. Le facteur d'échelle est inversement proportionnel à la longueur d'onde moyenne de la lumière retournant au détecteur. Si DGD $=\tau_{dc}$ seule une surface faible de la sphère de Poincaré est parcourue, et la longueur d'onde moyenne n'est donc pas très stable. Pour des gyroscopes de hautes performances, il convient de s'assurer que DGD $>100\times\tau_{dc}$ voire DGD $>1000\times\tau_{dc}$ ce qui permet d'explorer l'ensemble de la sphère de Poincaré et ainsi de garantir des hautes performances en facteur d'échelle. Ainsi, pour une source de type Erbium de longueur d'onde centrale 1530nm ayant une largeur de raie de l'ordre de 5nm la stabilité de la longueur d'onde moyenne est de quelques $10^{-3}$ lorsque le DGD est de l'ordre de $\tau_{dc}$ et de quelques $10^{-6}$ lorsque le DGD est de l'ordre d'une centaine de $\tau_{dc}$.

On note qu'en utilisant une fibre à forte PMD en régime couplé, l'invention va à l'encontre de la pratique selon l'art antérieur. En effet selon l'art antérieur, l'étalement d'une impulsion d'entrée à cause de la PMD d'une fibre détériore la capacité de cette fibre en terme de bande passante. L'art antérieur cherche donc à produire des fibres avec des valeurs de PMD faibles, stables dans le temps et insensibles aux variations des conditions environnantes.

Un exemple particulier de réalisation de la fibre optique à forte PMD en régime couplé utilisée dans le FOG selon l'invention présente les propriétés physiques données dans le tableau suivant :

| | Unité | Fibre à forte PMD en régime couplé |
|---|---|---|
| Longueur d'onde de fonctionnement | nm | 1550 |
| Pertes optiques | $\alpha$ (dB/km) | < 1 |
| PMDi | ps/km$^{1/2}$ | 500 |
| PMDc | ps/km | 150 (1 à 1000) |
| Longueur d'onde de coupure | $\lambda_c$ (nm) | = 1300 |
| Ouverture numérique | N.A. | 0,15 |
| Diamètre du champ modal | M.F.D. ($\mu$m) | 7,5 +/-1 |
| Diamètre extérieur (de la partie en quartz) | O.D. ($\mu$m) | 80 +/-1 |
| Diamètre du revêtement (diamètre de la partie en acrylate) | C.D. ($\mu$m) | 175 +/-10 |
| Performance en courbure | B.P. (dB/km) | < 1 |
| Niveau de rupture par élongation | P.T.L. (%) | < 1 % |
| Concentricité coeur / gaine | C.C.E. ($\mu$m) | < 1 |

(suite)

|  | Unité | Fibre à forte PMD en régime couplé |
|---|---|---|
| Plage de température | °C | -40 / +85 |

Bien évidemment, l'homme du métier comprend que l'on peut mettre au point des fibres optiques à forte PMD en régime couplé à toutes les longueurs d'onde et en particulier pour des applications à 820nm ou à 1310nm.

Il a été constaté qu'un FOG selon l'invention présente des performances comparables à celles atteintes avec un FOG connu du premier type comportant une fibre à conservation de polarisation.

Avantageusement, il a été constaté que la fibre à forte PMD est potentiellement plus facile à fabriquer que la fibre à conservation de polarisation. Une fibre $HPMD_c$ peut être réalisée avec une technologie similaire aux fibres MP (barreaux de contrainte ou coeur elliptique) mais en diminuant sa biréfringence ($\Delta N_{eff}$ de l'ordre de 1 à $2.10^{-4}$ comparé à $5.10^{-4}$ pour une fibre MP) ce qui simplifie considérablement sa fabrication. Ceci permet de réduire ainsi le coût de fabrication. Ceci permet également d'obtenir des fibres plus longues et de réaliser des bobines pour les gyroscopes plus importantes augmentant d'autant la sensibilité des FOG ainsi réalisés.

Bien évidemment, puisque la fibre à forte PMD ne possède pas de direction privilégiée, il est possible de réaliser des soudures dans la fibre de la bobine sans altérer les performances du FOG. Ceci autorise des réparations par des soudures de fibres dans la bobine, une augmentation de la longueur de la bobine.

Il apparaît donc possible de réaliser des fibres $HPMD_c$ de plus petit diamètre que des fibres à conservation de polarisation MP et ainsi d'améliorer la compacité des gyroscopes.

Avantageusement, il a été constaté qu'un FOG selon l'invention présente une sensibilité aux champs magnétiques moins importante que celle d'un FOG connu du premier type comportant une fibre à conservation de polarisation

Bien que l'invention ait été décrite en référence à un mode de réalisation particulier, elle n'est nullement limitée à ce mode de réalisation. Elle comprend tous les équivalents techniques des moyens décrits ainsi que leurs combinaisons qui entrent dans le cadre de l'invention, telle que définie par les revendications.

**Revendications**

1.  Interféromètre à fibre optique comprenant :

    - une source optique (1) large bande, apte à émettre un faisceau optique incident de longueur d'onde centrale λ et de largeur spectrale $\Delta\lambda_{FWHM}$, ayant un temps de décohérence $\tau_{DC} = \lambda^2/(c.\Delta\lambda_{FWHM})$,
    - une bobine comprenant N spires d'une fibre optique monomode (5) de longueur totale L, ladite fibre (5) ayant une première et une seconde extrémités,
    - des moyens optiques aptes à séparer le faisceau incident en un premier et un second faisceaux et à coupler respectivement le premier faisceau à la première extrémité et le second faisceau à la seconde extrémité de la fibre optique (5) de manière à ce que le premier faisceau parcoure la fibre optique (5) selon une première direction et le second faisceau parcoure la fibre optique (5) selon une direction contra-propagative, lesdits moyens optiques étant aptes à combiner les deux faisceaux issus respectivement des deux extrémités après propagation dans la fibre (5) en un faisceau de sortie,
    - un détecteur apte à détecter les interférences du faisceau de sortie, **caractérisé en ce que** :
    - la fibre optique (5) est une fibre optique à forte dispersion de modes de polarisation (PMD),
    - la longueur L de la bobine de fibre optique (5) est supérieure au double de la longueur de corrélation de la fibre (5), $L > 2.L_c$ de manière à ce que la fibre (5) fonctionne en régime de PMD couplée et
    - le différentiel de temps de groupe (DGD) de propagation entre deux états de polarisation orthogonaux accumulé sur la longueur L de la fibre (5) est supérieur au temps de décohérence de la source :

    $$DGD > \tau_{DC}$$

2.  Gyroscope à fibre optique comprenant un interféromètre selon la revendication 1 **caractérisé en ce que** :

    - les moyens optiques comprennent un séparateur optique (4) bidirectionnel apte à séparer spatialement le faisceau incident en un premier et un second faisceaux couplés respectivement à la première et à la seconde extrémité de la fibre optique (5) de manière à ce que le premier faisceau parcoure la fibre optique (5) selon une première direction et le second faisceau parcourre la fibre optique (5) selon une direction contra-propagative, ledit séparateur (4) étant apte à combiner les deux faisceaux issus respectivement des deux extrémités après propagation dans la fibre (5) en un faisceau de sortie, et
- un filtre monomode spatial et un polariseur (3) aptes à recevoir le faisceau incident de la source et à transmettre ledit faisceau incident monomode spatial et polarisé linéairement au séparateur optique (4).

3. Gyroscope selon la revendication 2, **caractérisé en ce qu'**il comprend un séparateur (2) apte à séparer spatialement le faisceau incident issu de la source et le faisceau de sortie et à transmettre respectivement le faisceau incident vers la bobine de fibre (5) et le faisceau de sortie vers le détecteur (6).

4. Gyroscope selon l'une des revendications 2 à 3, **caractérisé en ce que** la fibre optique (5) a un DGD accumulé sur la longueur L de la fibre (5) supérieur à cent fois le temps de décohérence de la source :

$$DGD > 100.\tau_{DC}$$

5. Gyroscope selon l'une des revendications 2 à 4, **caractérisé en ce que** la fibre optique (5) est une fibre biréfringente ayant un coefficient de PMD en mode couplé $PMD_c$ compris entre 1 et 1000 ps/√km.

6. Gyroscope selon l'une des revendications 2 à 5, **caractérisé en ce que** la fibre optique (5) est une fibre biréfringente ayant une différence d'indice effectif de groupe entre modes de polarisation orthogonaux

$$( \Delta Neff = \Delta n_{eff} - \lambda \times \frac{d\Delta n_{eff}}{d\lambda} )$$ à la longueur d'onde $\lambda$ comprise entre $10^{-6}$ et $2.10^{-4}$.

7. Gyroscope selon l'une des revendications 2 à 6, **caractérisé en ce que** la longueur L de la bobine de fibre (5) est comprise entre 0.1km et 20km.

8. Gyroscope selon la revendication 7, **caractérisé en ce que** la longueur d'onde $\lambda$ de la source est comprise entre 800 et 1600 nm et **en ce que** la largeur spectrale $\Delta\lambda_{FWHM}$ est comprise entre 0,1% et 10% de $\lambda$.

9. Système de navigation inertielle comprenant un gyroscope selon l'une des revendications 2 à 8.

**Patentansprüche**

1. Lichtwellenleiter-Interferometer, welches umfasst:

- eine optische Breitbandquelle (1), die geeignet ist, ein einfallendes Lichtbündel mit einer Mittelwellenlänge $\lambda$ und einer Spektralbreite $\Delta\lambda_{FWHM}$ auszusenden, und eine Dekohärenzzeit $\tau_{DC} = \lambda^2/(C.\Delta\lambda_{FWHM})$ aufweist,
- eine Spule, die N Windungen eines Einmoden-Lichtwellenleiters (5) mit einer Gesamtlänge L umfasst, wobei der Lichtwellenleiter (5) ein erstes und ein zweites Ende aufweist,
- optische Mittel, die geeignet sind, das einfallende Bündel in ein erstes und ein zweites Bündel aufzuteilen und das erste Bündel mit dem ersten Ende und das zweite Bündel mit dem zweiten Ende des Lichtwellenleiters (5) zu koppeln, derart, dass das erste Bündel den Lichtwellenleiter (5) entlang einer ersten Richtung durchläuft und das zweite Bündel den Lichtwellenleiter (5) entlang einer entgegengesetzten Ausbreitungsrichtung durchläuft, wobei die optischen Mittel geeignet sind, die beiden Bündel, die aus den beiden Enden nach Ausbreitung in dem Lichtwellenleiter (5) jeweils austreten, in einem Ausgangsbündel zu kombinieren,
- einen Detektor, der geeignet ist, die Interferenzen des Ausgangsbündels zu detektieren,

**dadurch gekennzeichnet, dass**:

- der Lichtwellenleiter (5) ein Lichtwellenleiter mit hoher Polarisationsmodendispersion (PMD) ist,
- die Länge L der Lichtwellenleiterspule (5) größer als das Doppelte der Korrelationslänge des Lichtwellenleiters (5) ist, $L > 2.L_c$, derart, dass der Lichtwellenleiter (5) im gekoppelten PMD-Modus funktioniert, und
- die differentielle Gruppenlaufzeit (DGD) der Ausbreitung zwischen zwei orthogonalen Polarisationszuständen, die auf der Länge L des Lichtwellenleiters (5) akkumuliert wird, größer als die Dekohärenzzeit der Quelle ist:

$$DGD > \tau_{DC}$$

**2.** Lichtwellenleiter-Gyroskop, welches ein Interferometer nach Anspruch 1 umfasst, **dadurch gekennzeichnet, dass**:

- die optischen Mittel einen bidirektionalen optischen Separator (4) umfassen, der geeignet ist, das einfallende Bündel räumlich in ein erstes und ein zweites Bündel aufzuteilen, die mit dem ersten bzw. mit dem zweiten Ende des Lichtwellenleiters (5) gekoppelt sind, derart, dass das erste Bündel den Lichtwellenleiter (5) entlang einer ersten Richtung durchläuft und das zweite Bündel den Lichtwellenleiter (5) entlang einer entgegengesetzten Ausbreitungsrichtung durchläuft, wobei der Separator (4) geeignet ist, die beiden Bündel, die aus den beiden Enden nach Ausbreitung in dem Lichtwellenleiter (5) jeweils austreten, in einem Ausgangsbündel zu kombinieren, und
- ein Monomode-Ortsfilter und einen Polarisator (3), die geeignet sind, das von der Quelle einfallende Bündel zu empfangen und das räumliche und linear polarisierte einfallende Monomode-Bündel zu dem optischen Separator (4) zu übertragen.

**3.** Gyroskop nach Anspruch 2, **dadurch gekennzeichnet, dass** es einen Separator (2) umfasst, der geeignet ist, das von der Quelle stammende einfallende Bündel und das Ausgangsbündel räumlich zu trennen und das einfallende Bündel zu der Lichtwellenleiterspule (5) und das Ausgangsbündel zu dem Detektor (6) zu übertragen.

**4.** Gyroskop nach einem der Ansprüche 2 bis 3, **dadurch gekennzeichnet, dass** der Lichtwellenleiter (5) eine auf der Länge L des Lichtwellenleiters (5) akkumulierte DGD aufweist, die größer als das Hundertfache der Dekohärenzzeit der Quelle ist:

$$DGD > 100.\tau_{DC}$$

**5.** Gyroskop nach einem der Ansprüche 2 bis 4, **dadurch gekennzeichnet, dass** der Lichtwellenleiter (5) ein birefringenter Lichtwellenleiter mit einem PMD-Koeffizienten im gekoppelten Modus $PMD_c$ ist, der zwischen 1 und 1000 ps/√km liegt.

**6.** Gyroskop nach einem der Ansprüche 2 bis 5, **dadurch gekennzeichnet, dass** der Lichtwellenleiter (5) ein birefringenter Lichtwellenleiter mit einer Differenz der effektiven Gruppenindizes zwischen orthogonalen Polarisationsmoden $(\Delta Neff = \Delta n_{eff} - \lambda \times \frac{d\Delta n_{eff}}{d\lambda})$ bei der Wellenlänge $\lambda$ ist, die zwischen $10^{-6}$ und $2.10^{-4}$ liegt.

**7.** Gyroskop nach einem der Ansprüche 2 bis 6, **dadurch gekennzeichnet, dass** die Länge L der Lichtwellenleiterspule (5) zwischen 0,1 km und 20 km liegt.

**8.** Gyroskop nach Anspruch 7, **dadurch gekennzeichnet, dass** die Wellenlänge $\lambda$ der Quelle zwischen 800 und 1600 nm liegt, und dadurch, dass die Spektralbreite $\Delta\lambda_{FWHM}$ zwischen 0,1 % und 10 % von $\lambda$ liegt.

**9.** Trägheitsnavigationssystem, welches ein Gyroskop nach einem der Ansprüche 2 bis 8 umfasst.

**Claims**

**1.** A fiber-optic interferometer, including:

- a wideband optical source (1) capable of emitting an incident optical beam with a central wavelength $\lambda$ and a spectral width $\Delta\lambda_{FWHM}$, having a decoherence time $\tau_{DC} = \lambda^2/(c .\Delta\lambda_{FWHM})$,
- a coil with N turns of a single-mode optical fiber (5) of total length L, said fiber (5) having a first and a second ends,
- optical means capable of splitting the incident beam into a first and a second beam and of coupling the first beam to the first end and the second beam to the second end of the optical fiber (5), respectively, so that the first beam travels through the optical fiber (5) in a first direction and the second beam travels through the optical fiber (5) in a counter-propagating direction, said optical means being capable of combining into an output beam the two beams emerging respectively from the two ends after propagation through the fiber (5),
- a detector capable of detecting the interference of the output beam,

**characterized in that**

- the optical fiber (5) is a high polarization mode dispersion (PMD) optical fiber,
- the length L of the optical fiber coil (5) is higher than twice the correlation length of the fiber (5), $L > 2.L_c$, so that the fiber (5) operates in coupled PMD regime and
- the group propagation time differential (DGD) between two orthogonal polarization states cumulated over the length L of the fiber (5) is higher that the decoherence time of the source:

$$DGD > \tau_{DC}.$$

2. A fiber-optic gyroscope comprising an interferometer according to claim 1, **characterized in that**:

- the optical means include a bidirectional optical splitter (4) capable of spatially splitting the incident beam into a first and a second beam coupled to the first and the second end of the optical fiber (5), respectively, so that the first beam travels through the optical fiber (5) in a first direction and the second beam travels through the optical fiber (5) in a counter-propagating direction, said splitter (4) being capable of combining into an output beam the two beams emerging respectively from the two ends after propagation through the fiber (5), and
- a spatial single-mode filter and a polarizer (3) capable of receiving the incident beam from the source and of transmitting said linearly polarized, spatial single-mode incident beam to the optical splitter (4).

3. A gyroscope according to claim 2, **characterized in that** it comprises a splitter (2) capable of spatially splitting the incident beam coming from the source and the output beam and of transmitting the incident beam to the fiber coil (5) and the output beam to the detector (6), respectively.

4. A gyroscope according to any one of claims 2 to 3, **characterized in that** the optical fiber (5) has a DGD cumulated over the length L of the fiber (5) higher than one hundred times the decoherence time of the source

$$DGD > 100. \tau_{DC}.$$

5. A gyroscope according to any one of claims 2 to 4, **characterized in that** the optical fiber (5) is a birefringent fiber having a PMD coefficient in coupled mode, $PMD_c$, comprised between 1 and 1000 ps/√km.

6. A gyroscope according to any one of claims 2 to 5, **characterized in that** the optical fiber (5) is a birefringent fiber having a group effective index difference between orthogonal polarization modes

$$\left( \Delta Neff = \Delta n_{eff} - \lambda \times \frac{d\Delta n_{eff}}{d\lambda} \right)$$ at the wavelength $\lambda$ comprised between $10^{-6}$ and $2.10^{-4}$.

7. A gyroscope according to any one of claims 2 to 6, **characterized in that** the length L of the fiber coil (5) is comprised between 0.1 km and 20 km.

8. A gyroscope according to claim 7, **characterized in that** the wavelength $\lambda$ of the source is comprised between 800 and 1600 nm and **in that** the spectral width $\Delta\lambda_{FWHM}$ is comprised between 0.1 % and 10 % of $\lambda$.

9. An inertial navigation system comprising a gyroscope according to any one of the claims 2 to 8.

Figure 1

Figure 2

Figure 3

Figure 4

Figure 5

Figure 8

Figure 6

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6801319 B, Szafraniec

**Littérature non-brevet citée dans la description**

- **JOHN A.BUCK.** *Fundamentals of Optical Fibers,* 2004, 161-172
- **BENOIT CLOUET.** *Etude de la dispersion modale de polarisation dans les systèmes régénérés optiquement,* 15 Janvier 2009, 37-56244
- **J. P. GORDON ; H. KOGELNIK.** PMD fundamentals : « Polarization mode dispersion in optical fibers ». *Proceedings of the National Academy of Sciences PNAS,* Avril 2000, vol. 97 (9), 4541-4550
- **P. K. A. WAI ; C. R. MENYUK.** Polarization mode dispersion, decorrelation, and diffusion in optical fibers with randomly varying birefringence. *IEEE Journal of Lightwave Technology,* Février 1996, vol. 14 (2), 148-157
- **M. MIDRIO.** Nonlinear principal states of polarization in optical fibers with randomly varying birefringence. *Journal of Optical Society of America B,* Février 2000, vol. 17 (2), 169-177
- **G. J. FOSCHINI ; C. D. POOLE.** Statistical theory of polarization dispersion in single mode fibers. *IEEE Journal of Lightwave Technology,* Novembre 1991, vol. 9 (11), 1439-1456
- **BRIAN L. HEFFNER ; PAUL R. HERNDAY.** Measurement of Polarization-Mode Dispersion. *Hewlett-Packard Journal,* Février 1995